# EUROPEAN PATENT APPLICATION

(11) **EP 2 058 744 A1**
(43) Date of publication of application: **13.05.2009**
(21) Application number: 08163927.0
(22) Date of filing: 09.09.2008
(51) Int. Cl.: G06F 17/30

(54) **Location expression detection device, program, and computer readable medium**

(30) Priority: 29.10.2007 JP 2007280286
(71) Applicant: Oki Electric Industry Co., Ltd., Minato-ku Tokyo 105-8460 (JP)
(72) Inventor: Okumura, Koji, Tokyo 105-8460 (JP)
(74) Representative: Betten & Resch

(57) **Abstract**

A location expression detection device extracts a location expression contained in an object text and determines one of the candidate places when the extracted location expression has a plurality of candidate places. A location expression information storage section stores correspondence of location expressions against locations. A location expression extraction section extracts a location expression from an object text and determines whether the extracted location expression has plural candidate places with reference to stored contents. An object text characteristic word extraction section extracts a characteristic word in the object text. A compared text search section searches for a compared text by using at least one of the plural candidate places and/or the characteristic word. A location expression identification section determines one of the candidate places based on information related to the searched compared text.

## Description

### BACKGROUND OF THE INVENTION

### Field of the Invention

The present invention relates to a location expression detection device, program and computer readable medium. These are preferably applied in a detection system for location expressions in which, for example, an unambiguous location expression string, such as a complete address character string, needs to be obtained from an ambiguous location expression string, such as a partial address character string.

### Description of the Related Art

Processing for detecting a named entity (a unique expression such as a location name, a human name, or an organization name) that appears in text is already widely used in information processing. GISs (Geographic Information Systems) have attracted particular attention recently, and there is considerable interest in automatic detecting of location expressions, such as place names. However, most location expressions such as place names and the like found in a text to be processed, for example in news articles and blog sites, are expressed in abbreviated form, with a name of a prefecture, a city etc. omitted. For example, there are places called "Nihonbashi" in both Tokyo-to and Osaka-fu, but a location expression in a text is usually only written as "Nihonbashi", and it is rare for "Nihonbashi, Chuo-ku, Tokyo-to" or "Nihonbashi, Naniwa-ku, Osaka-shi, Osaka-fu" to already be written out in full. For another example, there are places called "Portland" in both Oregon and Maine. There is a case where a location expression is written as only "Portland", however, it is not written out in full such as "Portland, Oregon" or "Portland, Maine".

There are two techniques for addressing this issue, as also shown in the related art of Japanese Patent Application Laid-Open (JP-A) No. 2002-82943.

The first of these techniques is a method of resolving ambiguities in a candidate of a unique location expression by reference to a co-occuring word appearing just before or just after the candidate of the unique location expression, or appearing elsewhere in the same text. For example, for "Nihonbashi", this technique determines that "Nihonbashi" means "Nihonbashi, Naniwa-ku, Osaka-shi, Osaka-fu" if a word such as a "PC" or a "maid café" appears just before or just after "Nihonbashi", or within the same text.

The second of these techniques is a method of resolving ambiguities in a candidate of a unique location expression by searching for a location expression which includes the candidate of the unique location expression. For example, for "Nihonbashi", the technique determines that "Nihonbashi" is "Nihonbashi, Naniwa-ku, Osaka-shi, Osaka-fu" if an unambiguous location expression including "Nihonbashi", such as "Nihonbashi, Naniwa-ku", appears within the same text.

The technology described in JP-A No. 2002-82943 employs these first and second techniques. When a text to be detected is a hypertext document, a scope searched for a co-occuring word for reference to, or a scope searched for an included location expression, which has been generally limited to within the same text, is expanded to documents which link to the text and which are linked to from the text.

However, in the first technique, it is necessary to generate a co-occuring dictionary for the respective location expressions in advance. It is difficult to determine automatically which word should be a co-occuring word, and a considerable effort is required for manual determination thereof. In addition, even if the co-occuring word could be determined, it is necessary to set many co-occuring words for each of the location expressions in order to improve a probability of identifying a location expression (place name) by use of co-occuring expressions. This results in an enormous co-occuring dictionary.

In the second method, ambiguities cannot be resolved if there is no word (expression) which includes a candidate of a unique location expression within a search range.

### SUMMARY OF THE INVENTION

The present invention has been made in consideration of the above circumstances and provides a location expression detection device, program and computer readable medium.

According to an aspect of the invention, there is provided a location expression detection device for extracting a location expression contained in an object text, and when the extracted location expression has a plurality of candidate places, determining one of the candidate places, the location expression detection device comprising: a location expression information storage section that stores correspondence of location expressions that can exist in various texts against locations that the location expressions can specify; a location expression extraction section that extracts a location expression from an object text and determines whether the extracted location expression has a plurality of candidate places by referring to stored contents of the location expression information storage section; an object text characteristic word extraction section that extracts a characteristic word in the object text; a compared text search section that searches for a compared text which acts as a compared object to the object text by using at least one of the plurality of candidate places and/or the characteristic word; and a location expression identification section that, when the extracted location expression has the plurality of candidate places, determines one of the candidate places based on information related to the searched compared text, wherein the object text characteristic word extraction section, the compared text search section, and the location expression identification section function at least when the extracted location expression has the plurality of candidate places.

### BRIEF DESCRIPTION OF THE DRAWINGS

Preferred embodiments of the present invention will be described in detail based on the following figures, wherein:
FIG. 1 is a block diagram showing a functional configuration of a location expression detection device according to a first exemplary embodiment;
FIG. 2 is an explanatory diagram showing an example configuration of a location expression table in the first exemplary embodiment;
FIG. 3 is a flow chart showing the operation of the location expression detection device according to the first exemplary embodiment;
FIG. 4A to 4D are explanatory diagrams of examples of object text and of compared text, used for explaining the operation of the location expression detection device according to the first exemplary embodiment;
FIG. 5 is a block diagram showing a functional configuration of a location expression detection device according to a second exemplary embodiment;
FIG. 6 is a flow chart showing the operation of the location expression detection device according to the second exemplary embodiment;
FIG. 7 is a block diagram showing a functional configuration of a location expression detection device according to a third exemplary embodiment;
FIG. 8 is an explanatory diagram showing an example configuration of a location expression table in the third exemplary embodiment; and
FIG. 9 is a flow chart showing the operation of the location expression detection device according to the third exemplary embodiment.

### DETAILED DESCRIPTION OF THE INVENTION

### (A) First Exemplary Embodiment

Explanation will now be given of details of a location expression detection device, program, and computer readable medium according to a first exemplary embodiment of the present invention, with reference to the figures.

### (A-1) Configuration of the First Exemplary Embodiment

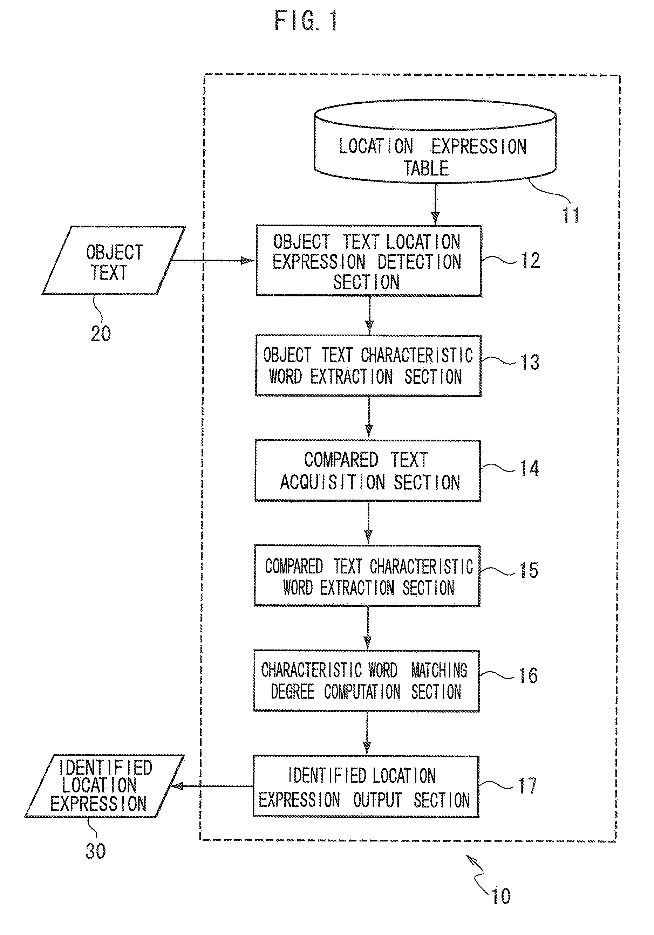

FIG. 1 is a block diagram showing a functional configuration of a location expression detection device 10 according to the first exemplary embodiment. The location expression detection device 10 may, for example, be configured as a portion of a dedicated device for text processing, or may be configured by installing a location expression detection program (including fixed data) in an information processing device for a general purpose, such as a PC (Personal Computer). The functionality thereof can be represented by the configuration shown in FIG. 1. Installation of the location expression detection program is not limited to downloading via a communications network, and installation may be made through a computer readable storage medium.

In FIG. 1, the location expression detection device 10 is input with an object text (a text to be subjected to detecting) 20, and an identified location expression 30 contained in the object text 20 is output therefrom. Various methods may be used for the input method of the object text 20. Namely, suitable input methods include such methods as reading in from a storage medium, reading in by transmission from an external device (including downloading), input using OCR, and input with a keyboard. Various methods may be used for output of the identified location expression 30. Namely, suitable output methods may include methods such as writing to a storage medium, transmission to an external device, printing out, and display output.

The location expression detection device 10 includes, functionally, a location expression table 11, an object text location expression detection section 12, an object text characteristic word extraction section 13, a compared text acquisition section 14, a compared text characteristic word extraction section 15, a characteristic word matching degree computation section 16, and an identified location expression output section 17.

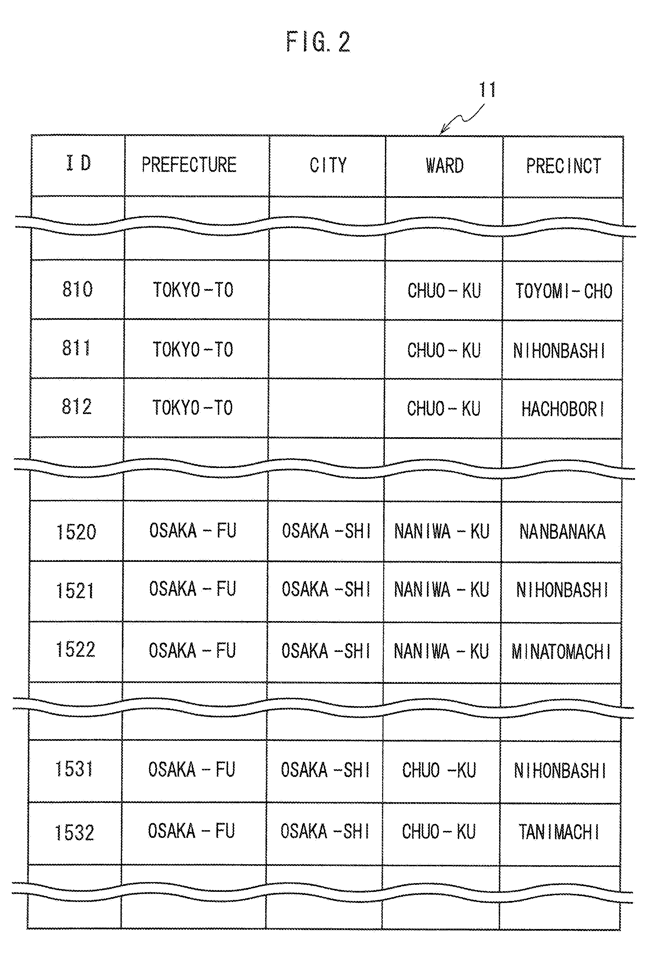

The location expression table 11 is a table in which location expression information, such as addresses at respective locations, is stored in rows (records) with their respective fields of prefecture, city, ward, precinct etc., for example as shown in FIG. 2. It should be noted that that each row is allocated an ID. The location expression table 11 is realized, for example, using a hardware resource containing a storage device, such as a HDD (Hard Disk Drive), ROM (Read Only Memory) etc.

The object text location expression detection section 12 extracts a portion of a location expression from the object text 20 that is being subjected to processing, while referencing the location expression table 11.

The object text characteristic word extraction section 13 extracts a characteristic word (a feature word) representing the characteristics of the text, from the object text 20.

The compared text acquisition section 14 acquires a text to act as a compared text (a text subject to be compared), in order to resolve ambiguity in an ambiguous location expression included in the object text 20. Plural texts for use as compared texts may be stored in a storage region provided for the location expression detection device 10 to use. A compared text may be acquired from this storage area, or a compared text may be acquired on each occasion over the internet. Another possibility is for a compared text to be acquired over the internet when a compared text cannot be obtained from the texts stored in the storage region.

The compared text characteristic word extraction section 15 extracts, from the compared text, a characteristic word representing characteristics of the text.

The characteristic word matching degree computation section 16 computes the degree of matching between the characteristic word of the object text and of the compared text.

The identified location expression output section 17 outputs the location expression in which ambiguities are resolved using the degree of matching computed by the characteristic word matching degree computation section 16.

The sections from the object text location expression detection section 12 up to the identified location expression output section 17 are realized in dedicated control devices, or by a hardware resource which includes a processor (CPU) executing programs, and a storage device storing programs and data such as RAM (Random Access Memory), ROM, a HDD etc.

The configuration as explained here is explained for each of functions. However, it is not necessary that physical configurations in hardware resources realizing the functions are clearly separated for each of the sections and provided independently. For example, a part or all of the sections, from the object text location expression detection section 12 to the identified location expression output section 17, may be realized with a common processor and RAM, ROM, and further a portion of another device which realizes another function may be used. A portion which configures the location expression detection device 10 may also be placed at another location and connected via a network.

### (A-2) Operation of the First Exemplary Embodiment

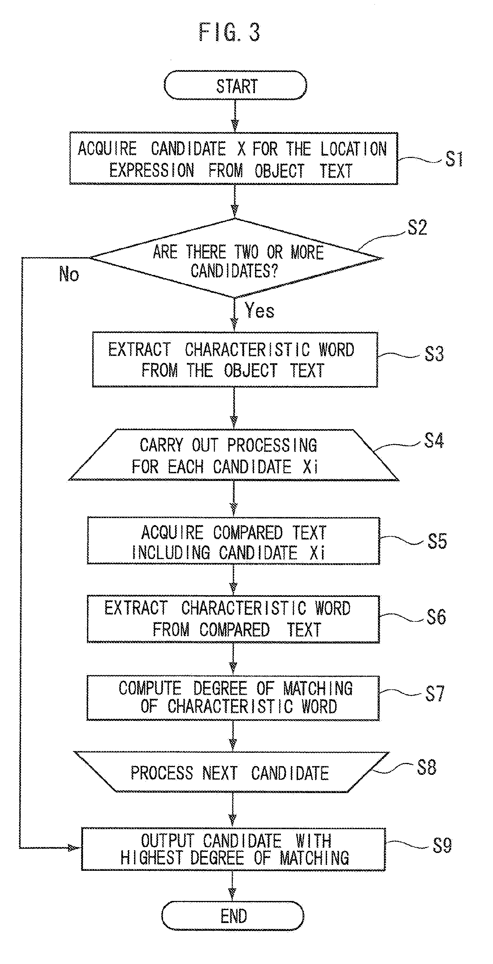

Explanation will now be given of details of the operation of the location expression detection device 10 according to the first exemplary embodiment, with reference to the figures. FIG. 3 is a flow chart showing the operation of the location expression detection device 10. FIG. 3 shows processing for detecting a single location expression which is detected from the provided object text 20, and the processing shown in FIG. 3 is executed plural times when plural location expressions are contained in the object text 20.

In the object text location expression detection section 12, first, the provided object text 20 is analyzed using the location expression table 11, such as the one shown in FIG. 2, the location expression is detected and also candidate(s) X for the location expression are obtained, and determination is made as to whether there are two or more such candidates (S1, S2). The candidate for the location expression is output straight away when there is a single candidate found for the location expression, and the routine is completed (S9).

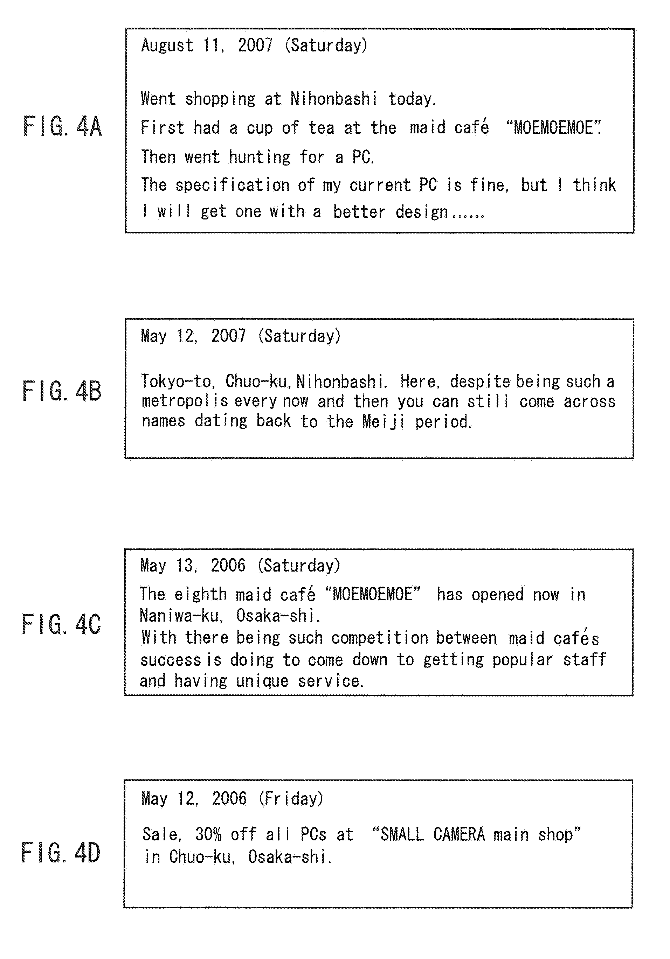

Explanation will now be given of cases when there are plural candidates. For example, when the object text 20 is as shown in FIG. 4A and the object text location expression detection section 12 detects the location expression "Nihonbashi", there are three candidates "Nihonbashi, Chuo-ku, Tokyo-to", "Nihonbashi, Naniwa-ku, Osaka-shi, Osaka-fu", and "Nihonbashi, Chuo-ku, Osaka-shi, Osaka-fu" obtained for the candidate group X.

Where there are two or more candidates for the location expression, a characteristic words is extracted from the object text 20 by the object text characteristic word extraction section 13. Various algorithms may be used for extracting a characteristic word, for example two indices may be computed, a tf (frequency of use of the word/phrase per document) and an idf (the inverse of the number of documents in which the word/phrase is found). The tf and the idf may then be applied in an existing algorithm (see, for example, JP-A No. 2005-25678). Explanation will be given below of a case in which "maid café", "MOEMOEMOE", and "PC" are obtained as the characteristic words from the object text 20 shown in FIG. 4A.

The processing of steps S4 to S8 is executed repeatedly for each candidate Xi contained in the candidate group X.

In the compared text acquisition section 14, a compared text related to the candidate Xi is acquired (S5), and then a characteristic word is extracted from the acquired compared text (S6).

For example, a compared text containing a statement relating to "Nihonbashi, Chuo-ku, Tokyo-to" is searched for and acquired from the three candidates "Nihonbashi, Chuo-ku, Tokyo -to", "Nihonbashi, Naniwa-ku, Osaka-shi, Osaka-fu", and "Nihonbashi, Chuo-ku, Osaka-shi, Osaka-fu". When there are plural compared texts that apply, these compared texts may be reduced to a number of compared texts determined according to a device processing power and accuracy required. For example, if a compared text like that shown in FIG. 4B is obtained relating to "Nihonbashi, Chuo-ku, Tokyo-to", then "Meiji period" is extracted therefrom as the characteristic word.

Processing for cases in which no compared text or an insufficient number of compared texts are obtained is described later.

When extraction of the characteristic word from the compared text is completed, the characteristic word matching degree computation section 16 computes the degree of matching between the characteristic word extracted from the object text 20 and the characteristic word obtained from the compared text (S7). If the characteristic words of the object text 20 are "maid café", "MOEMOEMOE", and "PC", and the characteristic word of the compared text is "Meiji period" then there are no matches of characteristic words and so the degree of matching is 0. It should be noted that when there are plural compared texts, for example, the processing of steps S6 and S7 is carried out for each of the compared texts, and an average value of the degrees of matching obtained is taken as the final degree of matching.

From the three candidates "Nihonbashi, Chuo-ku, Tokyo-to", "Nihonbashi, Naniwa-ku, Osaka-shi, Osaka-fu", and "Nihonbashi, Chuo-ku, Osaka-shi, Osaka-fu", when "Nihonbashi, Naniwa-ku, Osaka-shi, Osaka-fu" is subjected to processing (S4), a compared text including a statement relating to "Nihonbashi, Naniwa-ku, Osaka-shi, Osaka-fu" is searched for and acquired (S5).

However, it will now be assumed that there is no compared text that applies, or a sufficient number of compared texts cannot be obtained. In such cases the compared text is acquired by using a condition, from an element or a combination of two or more elements from other columns of the row corresponding to the candidate of the location expression table 11, where an ambiguity is resolved when the element or the combination of elements is combined with the ambiguous location expression "Nihonbashi". In this example, "Osaka-fu" and "Osaka-shi" include both the "Nihonbashi" of "Naniwa-ku" and the "Nihonbashi" of "Chuo-ku". Even if a search were to be carried out using "Osaka-fu" and "Osaka-shi", it cannot be determined whether the compared text which is obtained describes information for the "Nihonbashi" of "Naniwa-ku" or information for the "Nihonbashi" of "Chuo-ku". Therefore, for the common portions other than "Nihonbashi", which are common to both "Nihonbashi, Naniwa-ku, Osaka-shi, Osaka-fu" and "Nihonbashi, Chuo-ku, Osaka-shi, Osaka-fu", i.e., the portions "Osaka-fu" and "Osaka-shi", are not used as a search condition for the compared text. Consequently, if no compared text is obtained with "Nihonbashi, Naniwa-ku, Osaka-shi, Osaka-fu", the execution is made using "Naniwa-ku" for obtaining the compared text (exceptional processing in S5).

When the compared text has been acquired using "Naniwa-ku", the compared text like that shown in FIG. 4C is obtained. "maid café" and "MOEMOEMOE" are extracted from this compared text as characteristic words (S6).

The characteristic words of the object text 20 are "maid café", "MOEMOEMOE", and "PC", and since "maid café" and "MOEMOEMOE" of the characteristic words of the compared text are the same as the characteristic words of the object text 20, the degree of matching is 2 (S7).

From the three candidates "Nihonbashi, Chuo-ku, Tokyo-to", "Nihonbashi, Naniwa-ku, Osaka-shi, Osaka-fu", and "Nihonbashi, Chuo-ku, Osaka-shi, Osaka-fu", when "Nihonbashi, Chuo-ku, Osaka-shi, Osaka-fu" is subjected to processing (S4), a compared text including a statement relating to "Nihonbashi, Chuo-ku, Osaka-shi, Osaka-fu" is searched for and acquired (S5). A compared text like that show in FIG. 4D is obtained when this is undertaken. The characteristic words "SMALL CAMERA" and "PC" are obtained from this compared text (S6), and the degree of matching is 1 since "PC" matches the characteristic word of the object text (S7).

By computing the degree of matching in this manner for all of the candidates, the identified location expression output section 17 determines and outputs the location expression with the highest degree of matching of each of the Xi to be an identified location expression, as the ambiguous location expression subjected to detecting (S9). In the above described examples, "Nihonbashi, Naniwa-ku, Osaka-shi, Osaka-fu", with a degree of matching of 2, has the highest degree of matching, and the location expression "Nihonbashi" which is subjected to detection is identified as being "Nihonbashi, Naniwa-ku, Osaka-shi, Osaka-fu".

In the explanation of the operation above, for ease of understanding, the degree of matching was explained as being simply the number of characteristic words which match, but the degree of characteristics and the number of incidents of the characteristic words may be reflected in the computation of the degree of matching. The number of matches of a similar word/phrase to the characteristic word may also be reflected in an evaluation of the degree of matching. Also, when, for example, the object text and the compared text are hypertexts, a linking distance (direct, link-via-link, ......, no link connection) may be reflected in the evaluation of the degree of matching.

### (A-3) Effect of the First Exemplary Embodiment

According to the first exemplary embodiment, ambiguity in an ambiguous location expression, such as a portion of a location notation, can be resolved, even without using a co-occuring dictionary and also without a location notation which includes a candidate of a location expression.

A method of determination from a notation which includes a candidate by applying a mechanism for increasing reference documents has been considered, as shown in JP-A No. 2002-82943, but such a considered method is conjuctured to have a low identification accuracy. For a search for "Nihonbashi" in the three compared texts shown in the above FIGS. 4B to 4D, since "Nihonbashi" is only included in "Nihonbashi, Chuo-ku, Tokyo-to" of FIG. 4B, "Nihonbashi" would be mistakenly determined as being "Nihonbashi, Chuo-ku, Tokyo-to". A mistaken determination of this nature does not occur according to the first exemplary embodiment.

### (B) Second Exemplary Embodiment

Explanation will now be given of details of a second exemplary embodiment of a location expression detection device, program, and computer readable medium according to the present invention, with reference to the figures.

### (B-1) Configuration of the First Exemplary Embodiment

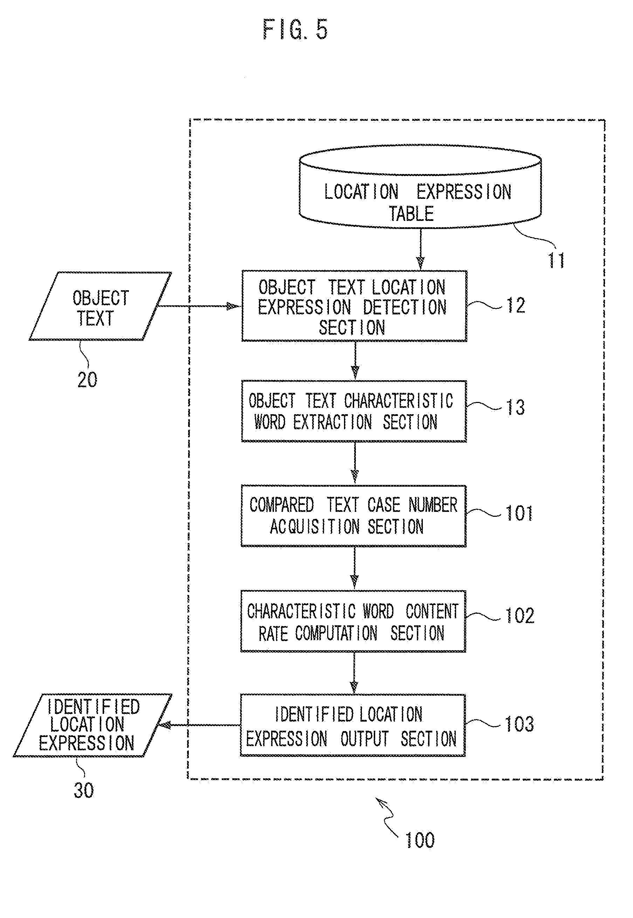

FIG. 5 is a block diagram showing a functional configuration of a location expression detection device 100 according to the second exemplary embodiment, and the same reference numerals have been allocated to portions thereof that are similar to those of the first exemplary embodiment of FIG. 1.

In FIG. 5, the location expression detection device 100 according to the second exemplary embodiment functionally includes a location expression table 11, an object text location expression detection section 12, an object text characteristic word extraction section 13, a compared text case number acquisition section 101, a characteristic word content rate computation section 102, and an identified location expression output section 103.

The location expression table 11, the object text location expression detection section 12 and the object text characteristic word extraction section 13 are similar to those of the first exemplary embodiment.

The compared text case number acquisition section 101 acquires the number of cases for the two types described below, for location expression candidates from which ambiguities have been removed with respect to ambiguous location expressions contained in the object text 20, in order to resolve the ambiguities of ambiguous location expressions. The compared text case number acquisition section 101 firstly acquires, for each of the location expression candidates, the number of cases (a first number of cases) where the compared text includes an identified expression of the location expression candidate. The compared text case number acquisition section 101 secondly acquires, for each location expression candidate, the number of cases (a second number of cases) where the compared text includes both the identified expression of the location expression candidate and the characteristic word related to the object text.

The characteristic word content rate computation section 102 computes, for each of the location expression candidates, a characteristic word content rate, using the first and second numbers of cases obtained by the compared text case number acquisition section 101.

The identified location expression output section 103 determines and outputs the location expression in which ambiguity has been resolved, based on the characteristic word content rate for each of the location expression candidates that has been computed by the characteristic word content rate computation section 102.

The compared text case number acquisition section 101, the characteristic word content rate computation section 102 and the identified location expression output section 103 that are newly provided in the second exemplary embodiment as compared to the first exemplary embodiment are all realizable with hardware resources and software similar to those of the object text location expression detection section 12 and the like of the first exemplary embodiment.

### (B-2) Operation of the Second Exemplary Embodiment

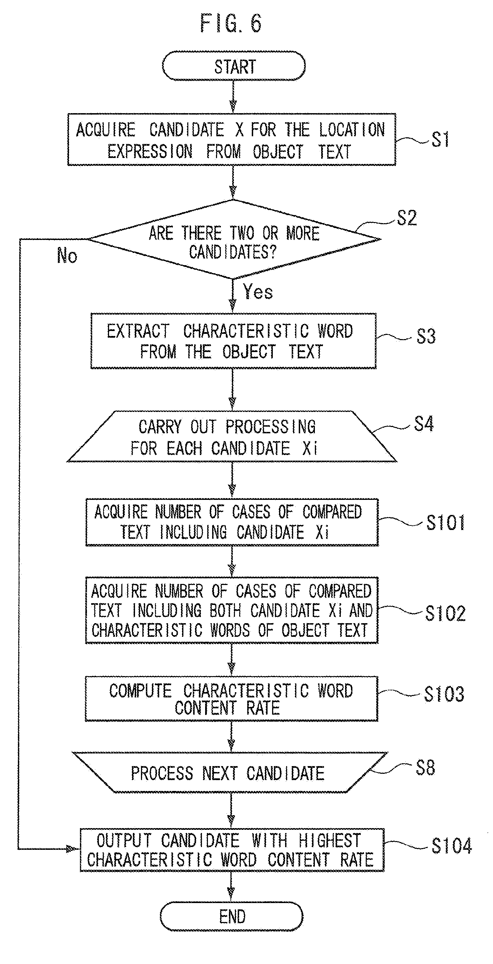

Explanation will now be given of details of the operation of the location expression detection device 100 according to the second exemplary embodiment, with reference to the figures. FIG. 6 is a flow chart showing the operation of the location expression detection device 100. FIG. 6 shows the processing for a single location expression which is detected from the provided object text 20, and the processing shown in FIG. 6 is executed plural times when plural location expressions are contained in the object text 20.

Steps S1 to S4 and S8 of FIG. 6 are similar to those of the first exemplary embodiment, and so explanation thereof will be omitted.

When there are two or more candidates for the identified location expression of a given location expression, first, when the given Xi is subjected to processing, the above described first number of cases and second number of cases are acquired by the compared text case number acquisition section 101 (S101, S102). Acquisition of the second number of cases is obtained from the compared text relating to the first number of cases.

The information relating to the location expression used during acquisition of these numbers of cases is a combination (a logical AND) of the location expression detected from the object text 20 together with another text string which is able to be discriminated from other candidates within a text string expressing the candidate Xi. The compared text case number acquisition section 101 determines the text string which is able to be discriminated from other candidates based on the stored contents of the location expression table 11.

In a case where "Nihonbashi, Chuo-ku, Tokyo-to" is a candidate, other than the detected location expression "Nihonbashi", there are "Chuo-ku" and "Tokyo-to" which are listed in sequence from the smaller district. Since "Chuo-ku" is also present in "Nihonbashi, Chuo-ku, Osaka-shi, Osaka-fu", the string "Chuo-ku" cannot be used for acquiring the numbers of cases. When "Nihonbashi, Chuo-ku, Tokyo-to" is a candidate, the compared text case number acquisition section 101 acquires the first and second numbers of cases using "Tokyo-to AND Nihonbashi". It should be noted that a rule may be adopted such that "Chuo-ku Tokyo-to AND Nihonbashi" is used for acquiring the first and second number of cases.

When "Nihonbashi, Naniwa-ku, Osaka-shi, Osaka-fu" is a candidate, apart from the detected location expression "Nihonbashi", there are "Naniwa-ku", "Osaka-shi" and "Osaka-fu", listed in sequence from the smaller district. The district which is just larger than the detected location expression "Nihonbashi", i.e., "Naniwa-ku", is able to be discriminated from other candidates. Therefore, the compared text case number acquisition section 101 acquires the first and second numbers of cases using "Naniwa-ku AND Nihonbashi" when the candidate is "Nihonbashi, Naniwa-ku, Osaka-shi, Osaka-fu".

When "Nihonbashi, Chuo-ku, Osaka-shi, Osaka-fu" is a candidate, apart from the detected location expression "Nihonbashi", there are "Chuo-ku", "Osaka-shi" and "Osaka-fu", listed in sequence from the smaller district. None of "Chuo-ku", "Osaka -shi" or "Osaka-fu" by themselves are able to be discriminated from other candidates. Therefore, a candidate which is able to be discriminated from other candidates is determined among a string in which plural administrative district notation are merged from the smaller administrative district. As a result, the compared text case number acquisition section 101 acquires the first and second number of cases using "Chuo-ku Osaka-shi AND Nihonbashi", when the candidate is "Nihonbashi, Chuo-ku, Osaka-shi, Osaka-fu".

It should be noted that the process of step S101 may be carried out so as to acquire the number of cases (the first number of cases) of compared texts which include the candidate notation itself.

In the acquisition of the second number of cases in step S102, a characteristic word of the object text 20 is also added to the condition used in the first number of cases acquisition, and included in a search formula.

When there are plural characteristic words, (1) any single one of the characteristic words may be used for acquiring the numbers of cases (selecting the characteristic word which has the highest evaluation value that determines whether it is a characteristic word), or (2) compared texts which include all of the plural characteristic words may be counted as a single case, or (3) compared texts which includes at least one of the plural characteristic words may be counted as a single case. When the characteristic words of the object text 20 are "maid café", "MOEMOEMOE", and "PC", the first method uses one (for example, "maid café") of the characteristic words from "maid café", "MOEMOEMOE", or "PC" in acquisition of the numbers of cases, the second method counts compared texts that include all of "maid café", "MOEMOEMOE", and "PC", and the third method counts compared texts that include any one or more of "maid café", "MOEMOEMOE" and/or "PC".

When the first and second number of cases are acquired, the characteristic word content rate computation section 102 obtains a characteristic word content rate using both of the first and second numbers of cases (S103). Various formulae may be used as a function for obtaining the characteristic word content rate, for example, the characteristic word content rate may be obtained simply as (the second number of cases) / (the first number of cases).

For example, if "Nihonbashi, Chuo-ku, Tokyo-to" is the candidate, and the first number of cases acquired using "Tokyo-to AND Nihonbashi" is 2410 cases, and the second number of cases acquired using "Tokyo-to AND Nihonbashi AND maid café" when only "maid café" is used as a characteristic word is 87 cases, then the characteristic word content rate is 87/2140 = 0.036. Also, for example, if "Nihonbashi, Naniwa-ku, Osaka-shi, Osaka-fu" is a candidate, and the first number of cases acquired using "Naniwa-ku AND Nihonbashi" is 450 cases, and the second number of cases acquired using "Naniwa-ku AND Nihonbashi AND maid café" when only "maid café" is used as a characteristic word is 36 cases, then the characteristic word content rate is 36/450 = 0.080. Furthermore, for example, if "Nihonbashi, Chuo-ku, Osaka-shi, Osaka-fu" is a candidate, and the first number of cases acquired using "Chuo-ku Osaka-shi AND Nihonbashi" is 610 cases, and the second number of cases acquired using "Chuo-ku Osaka-shi AND Nihonbashi AND maid café" when only "maid café" is used as a characteristic word is 16 cases, then the characteristic word content rate is 16/610 = 0.026.

When the characteristic word content rates have been obtained for all of the candidates, the candidate with the highest characteristic word content rate is determined and output as the identified notation of the ambiguous location expression by the identified location expression output section 103 (S104). In the above examples, since the characteristic word content rate of "Nihonbashi, Naniwa-ku, Osaka-shi, Osaka-fu" is the highest (0.080), the location expression of "Nihonbashi" which is extracted from the object text 20 is identified as "Nihonbashi, Naniwa-ku, Osaka-shi, Osaka-fu".

Among the candidates, the higher the rate at which the characteristic word extracted from the object text 20 is included is, the more it can be determined that the candidate is a compared text which has topics related to the same location as the location expression of the object text 20. For this reason, the candidate for which the characteristic word content rate is highest is determined to be the identified notation of the ambiguous location expression.

### (B-3) Effect of the Second Exemplary Embodiment

According to the second exemplary embodiment, a similar effect can be obtained as that of the first exemplary embodiment. In addition, according to the second exemplary embodiment, there is no need to carry out analysis processing of the compared text. Consequently, there is an effect in a case that the compared text is a text that can be searched such as on an internet search site since processing is simplified.

### (C) Third Exemplary Embodiment

Explanation will now be given of details of a location expression detection device, program, and computer readable medium according to a third exemplary embodiment of the present invention, with reference to the figures.

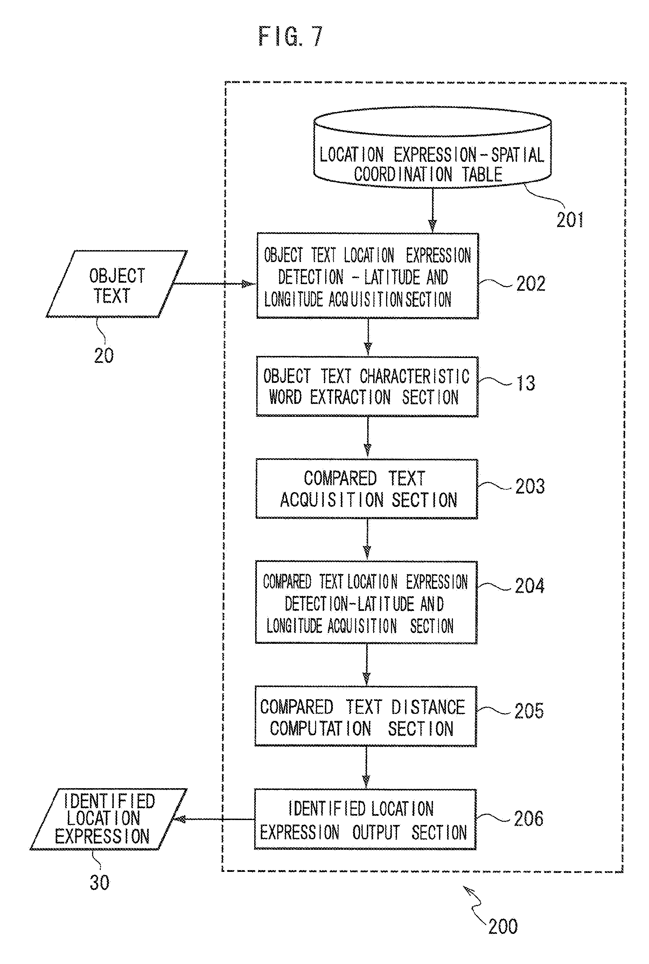

FIG. 7 is a block diagram showing a functional configuration of a location expression detection device 200 according to the third exemplary embodiment, and the same reference numerals have been allocated to portions thereof that are similar to those of the first exemplary embodiment of FIG. 1.

In FIG. 7, the location expression detection device 200 according to the third exemplary embodiment functionally includes a location expression-spatial coordinate table 201, an object text location expression detection - latitude and longitude acquisition section 202, an object text characteristic word extraction section 13, a compared text acquisition section 203, a compared text location expression detection - latitude and longitude acquisition section 204, a compared text distance computation section 205 and a identified location expression output section 103.

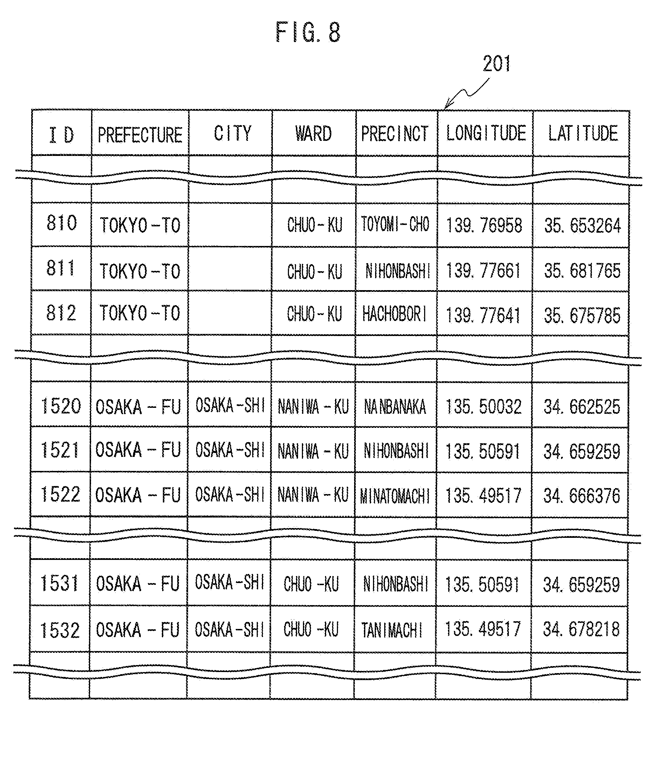

The location expression-spatial coordination table 201 is, for example as shown in FIG. 8, a table in which location expression information such as an address for each respective location is stored in rows with fields of prefecture, city, ward, precinct etc., and latitudes and longitudes are stored for each row, the table can be realized with a hardware resource including a storage device, such as an HDD, ROM or the like. It should be noted that latitudes and longitudes may be used as information to identify locations using coordinates, and notations in other coordinate systems may be used in place of latitudes and longitudes.

The object text location expression detection - latitude and longitude acquisition section 202 detects a portion of the location expression from the object text 20, and acquires the latitudes and longitudes relating to that location expression from the location expression-spatial coordinate table 201.

The object text characteristic word extraction section 13 extracts a characteristic word from the object text 20, representing characteristics of the text, in a similar manner to in the first exemplary embodiment.

The compared text acquisition section 203 acquires a compared text that includes the characteristic word extracted by the object text characteristic word extraction section 13. It should be noted that the third exemplary embodiment differs from the first exemplary embodiment in that, in the first exemplary embodiment, the compared text acquisition section 14 acquires the compared text based on the location expression information from which ambiguity can be removed, whereas, in the third exemplary embodiment, the compared text is acquired based on the characteristic word.

The compared text location expression detection - latitude and longitude acquisition section 204 extracts a location expression included in the compared text, and acquires the latitude and longitude for the location from the location expression-spatial coordinate table 201.

The compared text distance computation section 205 acquires the distance between the latitude and longitude of the identification candidate of the location expression extracted from the object text 20, and the latitude and longitude of the location expression acquired from the compared text.

An identified location expression output section 206 outputs the location expression in which ambiguity has been resolved using the distance computed by the compared text distance computation section 205.

The object text location expression detection - latitude and longitude acquisition section 202, the compared text acquisition section 203, the compared text location expression detection - latitude and longitude acquisition section 204, the compared text distance computation section 205, and the identified location expression output section 206 can be realized with hardware resources and software similar to those of the object text location expression detection section 12 and the like of the first exemplary embodiment.

### (C-2) Operation of the Third Exemplary Embodiment

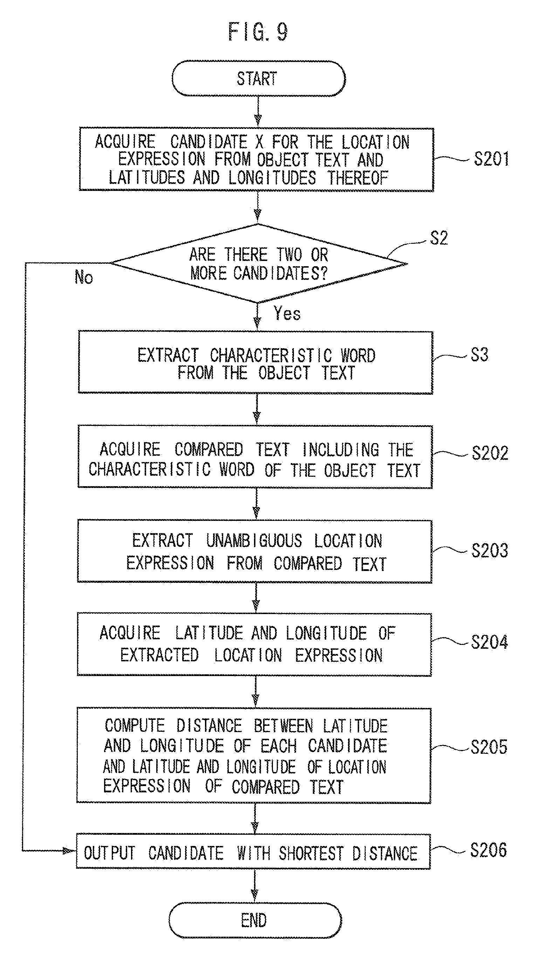

Explanation will now be given of details of the operation of the location expression detection device 200 according to the third exemplary embodiment, with reference to the figures. FIG. 9 is a flow chart showing the operation of the location expression detection device 200. FIG. 9 shows the processing for a single location expression which is detected from the provided object text 20, and the processing shown in FIG. 9 is executed plural times when plural location expressions are contained in the object text 20.

When the object text 20 is provided, the object text location expression detection - latitude and longitude acquisition section 202 analyses the object text 20 using the location expression-spatial coordinate table 201 shown in FIG. 8, and obtains a candidate group X of location expressions, together with their latitudes and longitudes (S201).

If the object text 20 is such as shown in FIG. 4A, the candidates "Nihonbashi, Chuo-ku, Tokyo-to", "Nihonbashi, Naniwa-ku, Osaka-shi, Osaka-fu", and "Nihonbashi, Chuo-ku, Osaka-shi, Osaka-fu" are detected and the latitudes and longitudes thereof acquired.

Then after this, the number of candidates is confirmed (S2), and if there is only a single candidate, then this candidate is immediately determined to be the identified notation of the ambiguous location expression, and is output (S206). However, if there are plural candidates, then a characteristic word is extracted from the object text 20 (S3).

The content rate of the characteristic word of the object text 20 in the compared text is acquired by the compared text acquisition section 203 (S202). The compared text which is acquired may be a text containing all of the characteristic words, or may be a text containing more than a predetermined number of characteristic words. All of the compared texts that satisfy the conditions may be extracted, or the compared texts may be extracted sequentially by repeating step S202 and later described step 206 until the number of compared texts including an unambiguous location expression reaches a predetermined number of compared texts.

For example, in a case that the characteristic words of the object text 20 are "maid café", "MOEMOEMOE", and "PC", and if a compared text containing two or more of the characteristic words is to be acquired, then the compared text shown in FIG. 4C is acquired, and if a compared text including one or more of the characteristic words is to be acquired, then the two compared texts shown in FIG. 4C and in 4D are acquired.

The compared text location expression detection - latitude and longitude acquisition section 204 then extracts an unambiguous location expression from among the compared texts, and acquires a latitude and longitude of the extracted location expression (S204). If a grading of an unambiguous location expression is coarse (such as when only a name of a prefecture, a city or a ward is described), then a latitude and longitude for a representative point, a latitude and longitude of a central point of a region (a center of gravity of an outline shape with no thickness), or the like, is acquired. The latitude and longitude of a location expression of which grading is coarse may also be acquired from the location expression-spatial coordinate table 201 shown in FIG. 8 where latitudes and longitudes are listed, or, for example, the latitude and longitude of a location expression of which grading is coarse may be acquired using a service provided over the internet which converts addressees to latitudes and longitudes.

For example, with the compared text as shown in FIG. 4C, the location expression "Naniwa-ku, Osaka-shi" is extracted, and the latitude and longitude of "Naniwa-ku, Osaka-shi" is acquired.

Next, the compared text distance computation section 205 obtains, for each candidate Xi for the identified location related to the location expression of the object text 20, the distance between the latitude and longitude of this candidate Xi and the latitude and longitude of the location expression in the compared text (S205).

For the above example, the respective distances from "Nihonbashi, Chuo-ku, Tokyo-to", "Nihonbashi, Naniwa-ku, Osaka-shi, Osaka-fu", and "Nihonbashi, Chuo-ku, Osaka-shi, Osaka-fu" to the latitude and longitude of the location expression "Osaka-shi, Naniwa-ku" in the compared text are obtained

The identified location expression output section 103 then determines and outputs the candidate with the shortest distance as the identified notation of the ambiguous location expression included in the object text 20 (S206). In the above example, the distance between the latitude and longitude of the location expression "Osaka-shi, Naniwa-ku" in the compared text to the latitude and longitude of the candidate "Nihonbashi, Naniwa-ku, Osaka-shi, Osaka-fu" is the shortest, and thus the location expression "Nihonbashi" detected from the object text 20 is identified as being "Nihonbashi, Naniwa-ku, Osaka-shi, Osaka-fu".

### (C-3) Effect of the Third Exemplary Embodiment

A similar effect can be obtained according to the third exemplary embodiment as that of the first exemplary embodiment. In addition, according to the third exemplary embodiment, a location of an ambiguous location expression can be identified, even if the same location expression as that of the candidate is not present in the compared text, as long as there is a compared text which has a location expression of a location nearby the ambiguous location expression or a location which includes the location of the ambiguous location, and which includes the same characteristic word.

### (D) Other Exemplary Embodiments

Various modified examples have been explained in the respective exemplary embodiments above, but modified exemplary embodiments such as those described below are also possible.

In the above exemplary embodiments, examples have been given in which the location expression is related to an address notation, but the present invention is not limited to address notation. For example, correct formal names for all of the aquariums in the country may be listed in a table, and the present invention is applicable to identify a location expression such as "aquarium" in the object text. In such a case, characteristic words for acquisition may be restricted to marine animals and rare fish by storing list information of potential characteristic words.

Two or three of the above technical ideas (concepts) of the first to third exemplary embodiments (identification methods for ambiguous location expressions) may be combined and applied.

For example, the methods of the second exemplary embodiment, the first exemplary embodiment and the third exemplary embodiment may be applied in turn. In this case, the method of the first exemplary embodiment may be applied when it is not possible to determine the identified notation of the ambiguous location expression using the method of the second exemplary embodiment (when the first and second characteristic word content rates are about the same). The method of the third exemplary embodiment may be then applied when it is still not possible to determine the identified notaion of the location expression using the method of the first exemplary embodiment (when the first and second degrees of matching are about the same).

Also, for example, the methods of the first to third exemplary embodiment may be executed in parallel, and the results of processing then merged to finally determine the identified notation of the ambiguous location expression. An evaluation value reflecting the degree of matching A of the first exemplary embodiment, the characteristic word content rate B of the second exemplary embodiment, and the distance C of the third exemplary embodiment may be computed (such as, for example, a weighted sum ofA, B and C). The identified notation of the ambiguous location expression may then be determined based on this evaluation value.

Embodiments of the present invention are described above, but the present invention is not limited to the embodiments as will be clear to those skilled in the art.

A first aspect of the present invention provides a location expression detection device for extracting a location expression contained in an object text, and when the extracted location expression has a plurality of candidate places, determining one of the candidate places, the location expression detection device comprising: a location expression information storage section that stores correspondence of location expressions that can exist in various texts against locations that the location expressions can specify; a location expression extraction section that extracts a location expression from an object text and determines whether the extracted location expression has a plurality of candidate places by referring to stored contents of the location expression information storage section; an object text characteristic word extraction section that extracts a characteristic word in the object text; a compared text search section that searches for a compared text which acts as a compared object to the object text by using at least one of the plurality of candidate places and/or the characteristic word; and a location expression identification section that, when the extracted location expression has the plurality of candidate places, determines one of the candidate places based on information related to the searched compared text, wherein the object text characteristic word extraction section, the compared text search section, and the location expression identification section function at least when the extracted location expression has the plurality of candidate places.

A second aspect of the present invention provides a computer readable medium storing a location expression detection program causing a computer to execute a process for extracting a location expression contained in object text, and when the extracted location expression has a plurality of candidate places, determining one of the candidate places, the processing comprising: storing correspondence of location expressions that can exist in various texts against locations that the location expressions can specify; extracting a location expression from an object text and determining whether the extracted location expression has a plurality of candidate places by referring to stored contents; extracting a characteristic word in the object text; searching for compared text which acts as a compared object to the object text, using the plurality of candidate places and/or the characteristic words; and determining one of the candidate places based on information related to the searched compared text when the extracted location expression has the plurality of candidate places.

A third aspect of the present invention provides a location expression detection program causing a computer to execute a process for extracting a location expression contained in object text, and when the extracted location expression has a plurality of candidate places, determining one of the candidate places, the processing comprising: storing correspondence of location expressions that can exist in various texts against locations that the location expressions can specify; extracting a location expression from an object text and determining whether the extracted location expression has a plurality of candidate places by referring to stored contents; extracting a characteristic word in the object text ; searching for compared text which acts as a compared object to the object text, using the plurality of candidate places and/or the characteristic words; and determining one of the candidate places based on information related to the searched compared text when the extracted location expression has the plurality of candidate places.

According to the above exemplary embodiments of the present invention, ambiguity in an ambiguous location expression can be resolved, even without the use of a co-occuring dictionary, and even when there is no location notation which includes all of notation of a candidate of the location expression.

## Claims

1. A location expression detection device for extracting a location expression contained in an object text, and when the extracted location expression has a plurality of candidate places, determining one of the candidate places, the location expression detection device comprising:
a location expression information storage section that stores correspondence of location expressions that can exist in various texts against locations that the location expressions can specify;
a location expression extraction section that extracts a location expression from an object text and determines whether the extracted location expression has a plurality of candidate places by referring to stored contents of the location expression information storage section;
an object text characteristic word extraction section that extracts a characteristic word in the object text;
a compared text search section that searches for a compared text which acts as a compared object to the object text by using at least one of the plurality of candidate places and/or the characteristic word; and
a location expression identification section that, when the extracted location expression has the plurality of candidate places, determines one of the candidate places based on information related to the searched compared text,
wherein the object text characteristic word extraction section, the compared text search section, and the location expression identification section function at least when the extracted location expression has the plurality of candidate places.

2. The location expression detection device according to claim 1, wherein the compared text search section further searches for a compared text which includes an unambiguous location expression relating to each of the plurality of candidate places, and
the location expression identification section further comprises:
a compared text characteristic word extraction section that extracts a characteristic word in the searched compared text; and
a characteristic word matching degree determination and output section that identifies a location of the location expression included in the object text based on an unambiguous location notation in the compared text with the highest degree of matching of the extracted characteristic word to the characteristic word in the object text.

3. The location expression detection device according to claim 1, wherein the compared text search section further acquires, for each of the plurality of candidate places,
a first number of cases, which is the number of cases of compared text which includes an unambiguous location notation relating to each of the candidate places, and
a second number of cases, which is the number of cases of compared text which includes both the unambiguous location notation relating to each of the candidate places and the characteristic word of the object text; and
the location expression identification section further comprises:
a characteristic word content rate computation section that obtains, for each of the plural candidate places, a characteristic word content rate which reflects a rate of compared texts among a plurality of compared texts which include the characteristic word, based on the first number of cases and on the second number of cases; and
a characteristic word content rate determination and output section that identifies the candidate place with the highest characteristic word content rate as the location of the location expression included in the object text.

4. The location expression detection device according to claim 1, wherein:
the location expression information storage section further stores coordinate information of the location which the location expression can specify;
the location expression extraction section further acquires the coordinate information of the plurality of candidate places;
the compared text search section further acquires a compared text which includes the characteristic word in the object text; and
the location expression identification section further comprises:
a location expression within compared text extraction section that obtains an unambiguous location expression in the compared text and coordinate information of the unambiguous location expression by referring to the stored contents in the location expression information storage section;
a distance computation section that obtains a distance between coordinate information of each of the plurality of candidate places and coordinate information relating to the location information of the compared text; and
a distance determination output section that identifies the candidate place with the shortest distance as the location of the location expression included in the object text.

5. A computer readable medium storing a location expression detection program causing a computer to execute a process for extracting a location expression contained in object text, and when the extracted location expression has a plurality of candidate places, determining one of the candidate places, the processing comprising:
storing correspondence of location expressions that can exist in various texts against locations that the location expressions can specify;
extracting a location expression from an object text and determining whether the extracted location expression has a plurality of candidate places by referring to stored contents;
extracting a characteristic word in the object text;
searching for compared text which acts as a compared object to the object text, using the plurality of candidate places and/or the characteristic words; and
determining one of the candidate places based on information related to the searched compared text when the extracted location expression has the plurality of candidate places.

6. A location expression detection program causing a computer to execute a process for extracting a location expression contained in object text, and when the extracted location expression has a plurality of candidate places, determining one of the candidate places, the processing comprising:
storing correspondence of location expressions that can exist in various texts against locations that the location expressions can specify;
extracting a location expression from an object text and determining whether the extracted location expression has a plurality of candidate places by referring to stored contents;
extracting a characteristic word in the object text ;
searching for compared text which acts as a compared object to the object text, using the plurality of candidate places and/or the characteristic words; and
determining one of the candidate places based on information related to the searched compared text when the extracted location expression has the plurality of candidate places.

7. A computer program comprising computer-readable instructions which when being executed on a computer cause said computer to act as an apparatus according to one of claims 1 to 4.
